# FASCICULE DE BREVET EUROPEEN

(11) **EP 1 322 696 B1**
(45) Date de publication et mention de la délivrance du brevet: **25.08.2004**
(21) Numéro de dépôt: 01974408.5
(22) Date de dépôt: 28.09.2001
(51) Int. Cl.: C08J 3/24, C08K 5/00, C08L 23/16

(54) **COMPOSITION COMPRENANT UN NITROXYDE, UN PROMOTEUR ET EVENTUELLEMENT UN INITIATEUR DE RADICAUX LIBRES**
ZUSAMMENSETZUNG, ENTHALTEND EIN NITROXID, EINEN PROMOTOR UND EVENTUELL EINEN RADIKALISCHEN INITIATOR
COMPOSITION COMPRISING A NITROXIDE, A PROMOTER AND OPTIONALLY A FREE RADICAL INITIATOR

(30) Priorité: 03.10.2000 FR 0012580
(43) Date de publication de la demande: 02.07.2003
(73) Titulaire: Atofina, 92800 Puteaux (FR)
(72) Inventeur: DEBAUD, Fabien, F-69005 Lyon (FR); DEFRANCISCI, Alfredo, 69003 Lyon (FR); GUERRET, Olivier, 64230 Mazerolles (FR); KERVENNAL, Jacques, F-69005 Lyon (FR)
(86) Numéro de dépôt international: PCT/FR2001/003011
(87) Numéro de publication internationale: WO 2002/028946

(56) Documents cités:
- EP-A- 0 499 581
- EP-A- 0 870 798
- EP-A- 0 903 354
- WO-A-00/02207
- WO-A-00/55211
- PATENT ABSTRACTS OF JAPAN vol. 1999, no. 05, 31 mai 1999 (1999-05-31) & JP 11 049865 A (NOF CORP), 23 février 1999 (1999-02-23) cité dans la demande
- DATABASE WPI Section Ch, Derwent Publications Ltd., London, GB; Class A00, AN 1968-97777P XP002168780 & SU 191 779 A (KUZ'MINSKII AS (RESIN IND RES INST))

## Description

La présente invention concerne la prévention du grillage avant la réticulation d'une composition thermoplastique et/ou élastomère par les peroxydes ou les composés azoïques.

La réticulation prématurée (grillage) pendant la phase préparatoire est une difficulté majeure de l'utilisation de peroxydes et des composés azoïques dans des applications de réticulation (durcissement) des matériaux élastomères et/ou thermoplastiques. La phase préparatoire consiste en général à malaxer les constituants et éventuellement les extruder à des températures souvent élevées. Les conditions opératoires de cette phase préparatoire conduisent bien souvent à la décomposition de l'initiateur peroxydique ou azoïque induisant ainsi la réaction de réticulation avec formation de particules de gel dans la masse du mélange. La présence de ces particules de gel conduit à des imperfections (inhomogénéité, rugosité de surface) du produit final. Un grillage excessif diminue les propriétés plastiques du matériau, de sorte qu'on ne peut plus transformer celui-ci, ce qui conduit à la perte du lot entier. En outre, un grillage excessif peut conduire à l'arrêt total de l'opération d'extrusion.

Pour pallier cet inconvénient, plusieurs solutions ont été proposées. Ainsi, il a été proposé d'utiliser un initiateur ayant une demi-vie de 10 heures à température élevée. Les inconvénients de cette approche sont la faible productivité due à une longue durée de durcissement et les coûts énergétiques élevés.

Il a également été proposé d'incorporer certains additifs pour réduire la tendance au grillage. Ainsi, l'utilisation d'hydroperoxydes organiques comme inhibiteurs de grillage pour des compositions à base de polyéthylène réticulées par un peroxyde a été décrite dans le brevet britannique GB 1 535 039. L'utilisation des monomères vinyliques a fait l'objet du brevet US 3 954 907. L'utilisation de nitrites a été décrite dans le brevet US 3 202 648. Le brevet US 3 335 124 décrit l'utilisation d'amines aromatiques, de composés phénoliques, de composés mercaptothiazoles, de sulfures, d'hydroquinones et de composés dithiocarbamates de dialkyle.

Tout récemment l'emploi du 2,2,6,6 - tétraméthylpipéridinyloxy (TEMPO) et du 4-hydroxy - 2,2,6,6 - tétraméthylpipéridinyloxy (4-hydroxy TEMPO) a fait l'objet d'une demande de brevet japonais JP 11-49865.

L'emploi des additifs de l'état de la technique cité précédemment pour allonger le temps de résistance au grillage a toutefois un effet néfaste sur le temps de durcissement et/ou la densité de réticulation finale. II conduit donc à une diminution de la productivité et/ou des propriétés du produit final.

La présente invention supprime les inconvénients de l'état de la technique car elle permet d'améliorer la résistance au grillage, la densité de réticulation sans que cela ait un impact négatif sur la durée de réticulation. Ceci est atteint en utilisant un nitroxyde en association avec au moins un promoteur de réticulation (promoteur) choisi dans le groupe (P) constitué de composés contenant au moins une double liaison pouvant être bifonctionnels ou polyfonctionneis. On peut citer à titre d'exemple des monomères vinyliques bifonctionnels, des monomères allyliques bifonctionnels, des monomères vinyliques polyfonctionnels, des monomères allyliques polyfonctionnels.

La présente invention a pour but de fournir une composition retardant le grillage comprenant un nitroxyde et au moins un promoteur choisi dans le groupe (P). Le nitroxyde est de préférence utilisé dans des proportions en poids allant de 1 : 0,2 à 1 : 5 et avantageusement entre 1 : 0,5 à 1 : 2 par rapport à la quantité de promoteur présente.

La présente invention a également pour but de fournir une composition de durcissement/réticulation (A) retardant le grillage, comprenant un initiateur de radicaux libres choisi dans le groupe constitué par des peroxydes organiques, des composés azoïques et de leurs mélanges, un nitroxyde et au moins un promoteur choisi dans le groupe (P). L'initiateur de radicaux libres est utilisé de préférence dans des proportions en poids de 1 : 0,02 à 1 : 1 et avantageusement de 1 : 0,1 à 1 : 0,5 par rapport à la quantité de nitroxyde présente.

L'initiateur de radicaux libres est utilisé de préférence dans les proportions en poids de 1 : 0,02 à 1 : 1 et avantageusement de 1 : 0,1 à 1 : 0,5 par rapport à la quantité de promoteur utitisée.

La présente invention fournit également une composition réticulable (B) comprenant un polymère thermoplastique et/ou un polymère élastomère pouvant être réticulés au moyen d'un peroxyde ou d'un composé azoïque, un initiateur de radicaux libres choisi dans le groupe constitué de peroxydes organiques et composés azoïques et de leurs mélanges, un nitroxyde et au moins un promoteur choisi du groupe (P). L'initiateur de radicaux libres représente de préférence entre 0,2 et 5 parties et avantageusement entre 0,5 et 3 parties pour 100 parties en poids de polymère. Les proportions de nitroxyde et du promoteur engagées par rapport à l'initiateur de radicaux libres sont de préférence voisines de celles utilisées pour la composition (A).

La présente invention fournit également un procédé de réticulation d'une composition réticulable comprenant un polymère thermoplastique et/ou un polymère élastomère pouvant être réticulés au moyen d'un peroxyde ou d'un composé azoïque dans lequel on mélange ledit polymère avec un initiateur de radicaux libres, choisi dans le groupe constitué des peroxydes organiques, des composés azoïques et de leurs mélanges, en présence d'un nitroxyde associé avec au moins un promoteur choisi dans le groupe (P).

La présente invention fournit également des objets moulés ou des extrudés tels que fils, câbles électriques obtenus à partir d'une composition réticulable (B).

Avantageusement les promoteurs choisis dans le groupe (P) sont le trans-stilbene, le divinylbenzène, le trans, trans -2,6 -diméthyl-2,4,6 octatriène, le dicyclopentadiène, le 3,7-diméthyl -1,3,6 -octatriène (OCIMENE), les composés représentés par la formule générale (I) : 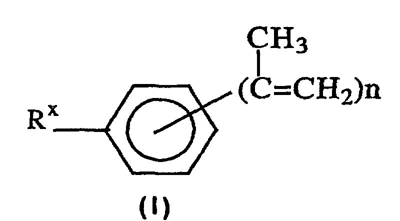 dans laquelle R^{x} représente un atome d'hydrogène ou un groupement alkyle de 1 à 9 atomes de carbone et n est un nombre entier compris entre 1 et 3,
- et les composés représentés par la formule générale (II) : 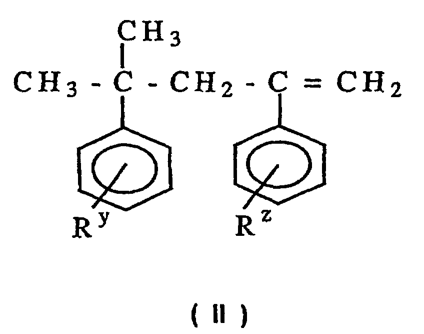
dans laquelle R^{y} et R^{z} pouvant être identiques ou différents représentent un groupement alkyle de 1 à 4 atomes de carbone.

Comme composés représentés par la formule générale ( **I** ), on peut citer l'α-méthyl styrène, l'ortho, meta, para diisopropenyl benzène, le 1,2,4-triisopropenyl benzène, le 1,3,5 -triisopropenyl benzène, le 3-isopropyl-ortho diisopropenyl benzène, le 4-isopropyl-ortho diisopropenyl benzène, le 4-isopropyl-m-diisopropenyl benzène, le 5-isopropyl-m-diisopropenyl benzène, le 2-isopropyl-p diisopropenyl benzène.

Comme composés représentés par la formule générale ( **II** ), on peut citer le 2,4-di (3-isopropylphenyl)-4-méthyl-1 pentène, le 2,4-di (4-iso propylphényl) 4-méthyl-1 pentène, le 2-(3-isopropylphényl)-4-(4-isopropylphényl)-4-méthyl-1-pentène, le 2-(4-isopropylphényl)-4-(3-isopropylphényl)-4-méthyl-1-pentène, le 2,4-di(3-méthyl-phényl)-4-méthyl-1 pentène, le 2,4-di(4-méthylphényl)-4-méthyl-1 pentène.

Le méthacrylate de méthyle, le méthacrylate de lauryle, le méthacrylate d'allyle, le triacrylate de triméthylolpropane, le cyanurate de triallyle (TAC), l'isocyanurate de triallyle (TAIC), le phosphate de triallyle, le tétra-allyloxyéthane, le carbonate d'allyldiglycol, le trimellate de triallyle, le citrate de triallyle, l'adipate de diallyle, le téréphalate de diallyle, l'oxalate de diallyle, le fumarate de diallyle, le diméthacrylate d'éthyléneglycol et le méthacrylate de 2-hydroxyéthyle, peuvent également convenir comme promoteur.

Peuvent également convenir comme promoteurs du groupe (P), les composés représentés par la formule générale (X). 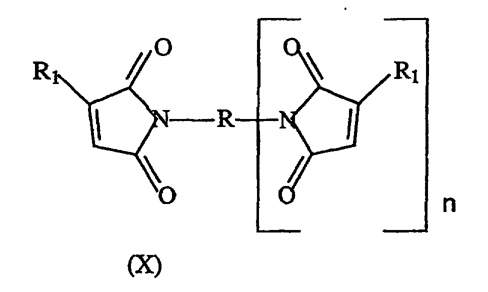 dans laquelle n est égal à 1 ou 2 et R est divalent ou trivalent et est choisi dans le groupe formé de groupement aliphatique acyclique ayant de 2 à 16 atomes de carbone, groupement aliphatique cyclique ayant de 5 à 20 atomes de carbone, groupement aromatique ayant de 6 à 18 atomes de carbone et groupement alkyl aromatique (alkylaryl) ayant de 7 à 24 atomes de carbone, et ces groupements divalent ou trivalent peuvent contenir un ou plusieurs heteroatome d'oxygène, d'azote et/ou de soufre en remplacement à un ou plusieurs atomes de carbone et chaque R₁ est identique et représente un atome d'hydrogène ou un groupement alkyl ayant de 1 à 18 atomes de carbone.

Parmi les composés de formule générale (X), les bismaléimides et les biscitraconimides sont avantageusement choisis.

Comme bismaléimide on peut citer le bismaléimide de N,N'-m-phénylène, le bismaléimide de N,N'-ethylène, bismaléimide de N,N'-hexaméthylène, , bismaléimide de N,N'-dodécaméthylène, bismaléimide de N,N'-(2,2,4-triméthylhexaméthylène), bismaléimide de N,N'-(oxydipropylène), bismaléimide de N,N'- (aminodipropylène), bismaléimide de N,N'-(éthylènedioxydipropylène), bismaléimide de N,N' (1,4-cyclohexylène), bismaléimide N,N'(1,3-cyclohexylène), bismaléimide de N,N'-(méthylène 1,4-dicyclohexylène), bismaléimide de N,N'-(isopropylidène-1,4-dicyclohexylène, bismaléimide de N,N'-(oxy-1,4-dicyclohexylène), bismaléimide de N,N'-p-(phénylène), bismaléimide de N,N' -(o-phénylène), bismaléimide de N,N'-(1,3-naphthylène), bismaléimide de N,N'-(1,4-naphthylène), bismaléimide de N,N'-(1,5-naphthylène), bismaléimide de N,N'-(3,3'diméthyl-(4,4-diphénylène), bismaléimide de N,N'-(3,3-dichloro-4,4 biphénylène), bismaléimide de N,N'-(2,4-pyridyl), bismaléimide de N,N'-(2,6-pyridyl), bismaléimide de N,N'-(1,4 anthraquinonediyl), bismaléimide de N,N'-(m-tolylène), bismaléimide de N,N' (p-tolylène), bismaléimide de N,N'-(4,6-diméthyl-1,3-phénylène), bismaléimide de N,N'-(2,3-diméthyl-1,4-phénylène), bismaléimide de N,N'-(4,6-dichloro-1,3-phénylène), bismaléimide de N,N'-(5-chloro-1,3-phénylène), bismaléimide de N,N'-(5-hydroxy-1,3-phénylène), bismaléimide de N,N'-(5-méthoxy-1,3-phénylène), bismaléimide de N,N'-(m-xylylène), bismaléimide de N,N'-(p-xylylène), bismaléimide de N,N'-(méthylènedi-p-phénylène), bismaléimide de N,N'-(isopropylidènedi-p-phénylène), bismaléimide de N,N'-(oxydi-p-phénylène), bismaléimide de N,N'-(thiodi-p-phénylène), bismaléimide de N,N'-(dithiodi-p-phénylène), bismaléimide de N,N'-(sulfodi-p-phénylène), bismaléimide de N,N'-(carbonyldi-p-phénylène), α, α'-bis-(4-maléimodophényl)-méta-diisopropylbenzène, bismaléimide de α, α'-bis-(4-p-phénylène) and α, α'-bis-(4-maleimidophenyl)-para-diisopropylbenzène.

Comme biscitraconimides, on peut citer le :
- Biscitraconimide de 1,2-N,N'-diméthylène ;
- Biscitraconimide de 1,2-N,N'-triméthylène ;
- Biscitraconimide de 1,5-N,N'-(2-méthyl-pentaméthylène) ; and
- Biscitraconimide de N,N'-méthylphénylène).

Les composés de formule générale (X) sont de préférence choisis pour réticuler les élastomères.

Comme nitroxyde, on peut utiliser par exemple ceux représentés par la formule générale (**III**): 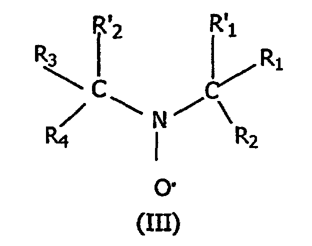 dans laquelle R₁, R₂, R₃, R₄, R'₁ et R'₂ pouvant être identiques ou différents représentent un atome d'hydrogène, un atome d'halogène tel que le fluor, le chlore, le brome ou l'iode, un groupement hydrocarboné linéaire, ramifié ou cyclique, saturé ou insaturé tels qu'un radical alkyle ou phényle, une chaîne de polymère pouvant par exemple être une chaîne de poly(meth)acrylate d'alkyle comme le polyméthacrylate de méthyle, de polydiène, de polyoléfine ou de polystyrène, un groupement fonctionnalisé tel qu'un groupement cyano -CN, un groupement ester-COOR, un groupement amide - CON(R)₂, un groupement alcoxyle-OR, un groupement phosphonate -PO(OR)₂ dans lequel R représente une chaîne hydrocarbonée ayant de 1 à 9 atomes de carbone. En outre, R'₁ et R'₂ peuvent être reliés entre eux pour former un cycle comme par exemple les nitroxydes représentés par les formules suivantes: 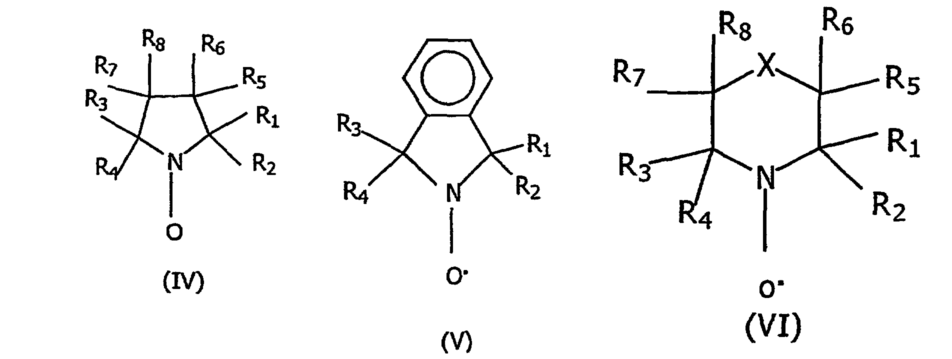 dans lesquelles R₅, R₆, R₇, R₈, pouvant être identiques ou différents, peuvent être choisis dans la même famille de groupement que celle qui vient d'être envisagée pour R₁, R₂, R₃, R₄ et de plus, peuvent représenter un groupement hydroxyle -OH, un groupement acide tel que -COOH ou -PO(OH)₂ ou -SO₃H. De plus, X dans la formule ( VI ) représente un groupement bivalent choisi parmi le méthylène -CH₂-, le -C(OR)(OR')-, le carbonyl-C(O)-, l'oxy -O- et -CHZ- avec Z représentant un reste monovalent choisi parmi les groupements cyano : -CN, amino : -NRR', alcoxy : -OR, iminoyl -N=CRR', carboxylate : -OC(O)-R, amide : -NHR-C(O)R', dans lesquels R et R' identiques ou diffétents représentent un atome d'hydrogène, un groupement alkyle, linéaire ou ramifié ayant un nombre d'atomes de carbone allant de 1 à 10, un groupement benzyle ou phényle. X dans la formule (VI) peut également représenter un groupement phosphonate : -OP(O)R''R'''- avec R'' et R''' ayant la même signification que Z

On peut également utiliser les nitroxydes représentés par la formule générale (VII) 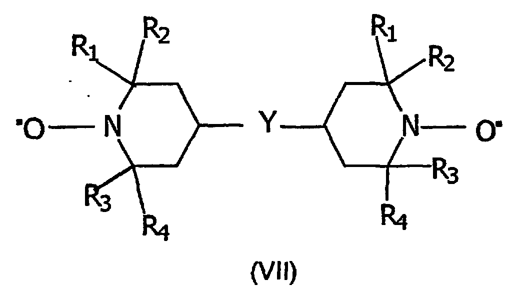 dans laquelle R₁, R₂, R₃, R₄, pouvant être identiques ou différents ont la même signification que ceux utilisés pour les formules (III) à (VI) et Y représente un groupement bivalent choisi parmi :

--OC(O)―(CRₐR_{b})ₙ―C(O)O--,

-- NH―(CRₐR_{b})ₙNH--,

--NHC(O)―(CRₐR_{b})ₙ--C(O)NH--,

-- S --, --O--; Rₐ et R_{b}, identiques ou différents, représentent un atome d'hydrogène ou un radical alkyle, linéaire ou ramifié, ayant un nombre d'atomes de carbone allant de 1 à 10 et n représente un nombre entier allant de 0 à 20.

En outre, on peut utiliser les nitroxydes représentés par la formule générale ( VIII ) : 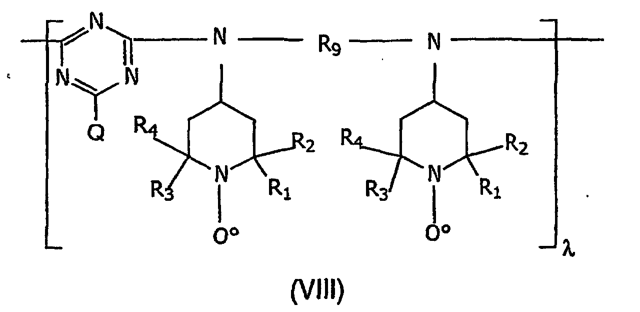 dans laquelle R₁, R₂, R₃ et R₄ pouvant être identiques ou différents, ont la même signification que ceux des formules précédentes ( III ) à (VII), λ est un nombre entier compris entre 1 et 20, R₉ représente un groupement alkylène ayant un nombre d'atomes de carbone allant de 2 à 12 qui peut être interrompu par un -O―ou -NR₁₀― avec R₁₀ désignant un atome d'hydrogène, un groupement alkyle ayant un nombre d'atomes de carbone compris entre 1 et 12, ou un groupement cycloalkyle et Q représente un radical -OR₁₁, -NHR₁₂, ou -NR₁₂R₁₃ où R₁₁ représente un radical alkyle, linéaire ou ramifié ayant un nombre d'atomes de carbone allant de 1 à 12, un radical alcoxyalkyle en C₃ - C₁₂, un radical cyclohexyle, un radical benzyle, un radical phényle, un radical tolyle ou un reste 2, 2, 6, 6-tétrapipéridinyle, R₁₂ et R₁₃ ont la même signification que R₁₁, et de plus, peuvent également former ensemble et avec l'atome d'azote qui les porte un radical hétérocyclique à 5, 6 ou 7 chaînons pouvant contenir en outre un oxygène.

Les nitroxydes de formule générale (VIII) le plus souvent utilisés sont ceux obtenus par oxydation des amines commercialisées par la Société CIBA sous la dénomination Chimasorb 944 où R₁, R₂, R₃ et R₄ désignant chacun un groupement méthyle, R₉ un groupement alkylène à 6 atomes de carbone, Q représentant un radical -N(O°)-C₈H₁₁ et λ étant un nombre entier compris entre 2 et 4.

Les nitroxydes de formule générale (VI) préférés sont ceux pour lesquels R₁, R₂, R₃ et R₄ désignent chacun un groupement méthyle, R₅, R₆, R₇ et R₈ représentent chacun un atome d'hydrogène et X un groupement -CHZ-.

En particulier, on peut citer comme nitroxyde de formule générale (VI) le 2,2,6,6-tétraméthyl-1-pipéridinyloxy généralement commercialisé sous la dénomination TEMPO, le 4-hydroxy 2,2,6,6-tétraméthyl-1-pipéridinyloxy commercialisé sous la dénomination 4-hydroxy TEMPO, le 4-méthoxy-2,2,6,6-tétraméthyl-1-pipéridinyloxy communément appelé 4-méthoxy-TEMPO, le 4-oxo-2,2,6,6 tétraméthyl-1-pipéridinyloxy communément appelé 4-oxo-TEMPO.

Les nitroxydes de formule générale (VI) particulièrement préférés sont ceux représentés par la formule suivante : 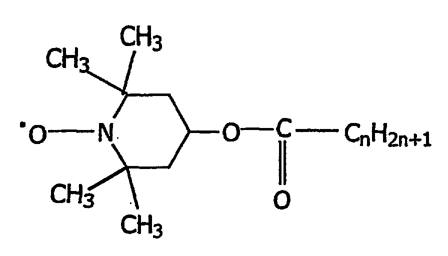 avec n pouvant varier de 1 à 20.

Les nitroxydes tels que le 2,2,5,5 tétraméthyl-1-pyrrolidinyloxy commercialisé sous la marque PROXYL, le bis (1-oxyl-2,2,6,6 tétraméthylpipéridine-4-yl) sébacate commercialisé sous la marque CXA 5415 par la Société Ciba Specialty Chemical, le 2,2,6,6-tétraméthyl-4-hydroxypipéridine-1-oxyl monophosphonate, le 3-carboxy-2,2,5,5-tétraméthylpirrolidinyloxy (communément appelé 3-carboxy Proxyl ) sont également préférés.

Selon la présente invention, on peut employer comme initiateurs des radicaux libres, des composés azoïques et/ou des peroxydes organiques qui, par décomposition thermique, produisent des radicaux libres qui facilitent la réaction de durcissement/réticulation. Parmi les initiateurs de radicaux libres utilisés comme agent de réticulation, les peroxydes de dialkyle et les initiateurs diperoxycétals sont préférés. On trouvera une description détaillée de ces composés dans *Encyclopedia of Chemical Technology*, 3^{ème} édition, vol. 17, pages 27 à 90 (1982).

Parmi les peroxydes de dialkyle, les initiateurs préférés sont : peroxyde de dicumyle, peroxyde de di-t-butyle, peroxyde de t-butylcumyle, le 2,5-diméthyl-2,5-di(t-butylperoxy)hexane, 2,5-diméthyl-2,5-di(t-amylperoxy) hexane, 2,5-diméthyl-2,5-di(t-butylperoxy)hexyne-3, 2,5-diméthyl-2,5-di(t-amylperoxy)hexyne-3, α, α-di [(t-butyl-peroxy)isopropyl] benzène, peroxyde de di-t-amyle, 1,3,5-tri [(t-butylperoxy)isopropyl]benzène, 1;3-diméthyl-3(t-butylperoxy)butanol, 1,3-diméthyl-3(t-amylperoxy) butanol et des mélanges de ceux-ci.

Parmi les diperoxycétals, les initiateurs préférés sont : 1,1-di (t-butylperoxy)-3,3,5-triméthylcyclohexane, 1,1-di (t-butylperoxy) cyclohexane, 4,4 di (t-amylperoxy)valérate de n-butyle, 3,3-di (t-butylperoxy)butyrate d'éthyle, 2,2-di (t-amylperoxy) propane, 3,6,6,9,9-pentaméthyl-3-éthoxycarbonylméthyl-1,2,4,5-tétra-oxacyclononane, 4,4-bis(t-butylperoxy)valérate de n-butyle, 3,3-di(t-amylperoxy)butyrate d'éthyle et des mélanges de ceux-ci.

Comme composés azoïques, on peut citer à titre d'exemple le 2,2' azobis (2-acétoxypropane), l'azobisisobutyronitrile, l'azodicarbamide, le 4,4' azobis acide cyano pentanoïque et le 2,2' azobis méthyl butyronitrile.

Le peroxyde de dicumyle et l'α, α' di [(t-butyl-peroxy)isopropyl] benzène sont particulièrement préférés.

Lés polymères thermoplastiques et/ou élastomères pris en considération dans la présente invention peuvent être définis comme des polymères naturels ou synthétiques qui ont un caractère thermoplastique et/ou élastomère et qui peuvent être réticulés (durcis) sous l'action d'un agent de réticulation. Dans *Rubber World, "Elastomer Crosslinking with Diperoxyketals"*, octobre 1983, pages 26-32, et dans *Rubber and Plastic News*, "*Organic Peroxides for Rubber Crosslinking*", 29 septembre 1980, pages 46-50, on décrit faction de réticulation et des polymères réticulables. Des polyoléfines qui conviennent à la présente invention sont décrites dans *Modem Plastics Encyclopedia 89*, pages 63-67, 74-75. A titre d'exemple de polymères et/ou élastomères, on peut citer le polyéthylène linéaire de faible densité, le polyéthylène de faible densité, le polyéthylène de densité élevée, le polyéthylène chloré, les terpolymères d'éthylène-propylène-diène (EPDM), les copolymères d'éthylène-acétate de vinyle, les copolymères d'éthylène propylène, le caoutchouc de silicone, le caoutchouc naturel (NR), le polyisoprène (IR), le polybutadiène (BR), les copolymères acrylonitrile-butadiène (NBR), les copolymères styrène-butadiène (SBR). le polyéthylène chlorosulfoné ou les fluoroélastomères.

On peut également citer les copolymères d'éthylène-(méth)acrylate de méthyle et les copolymères d'éthylène-méthacrylate de glycidyle.

Outre les constituants précédemment cités, les compositions (A) et (B) peuvent comprendre des anti-oxydants, des stabilisants, des plastifiants et des charges inertes telles que la silice, l'argile ou le carbonate de calcium.

Les compositions (A) et (B) peuvent comprendre plusieurs nitroxydes (N). Elles peuvent également comprendre plusieurs initiateurs de radicaux libres.

Selon le procédé de la présente invention, la température de réticulation peut être comprise entre 110 et 220°C et de préférence entre 140 et 200° C.

Avantageusement, le procédé est mis en oeuvre en présence d'une quantité d'initiateur, de nitroxyde et promoteur telle que les rapports en poids initiateur/polymère, nitroxyde/polymère et promoteur/polymère soient voisins de la composition (B).

La transformation des compositions réticulables en objets moulés ou extrudés peut être effectuée pendant ou après la réticulation.

### PARTIE EXPERIMENTALE

Dans ce qui suit, les abréviations suivantes sont utilisées :
- M_{H} :: la valeur maximale du couple obtenu à partir de la courbe enregistrée par le rhéomètre.
Cette valeur détermine la densité de réticulation.
- t₉₀ :: temps de réticulation, temps nécessaire pour atteindre 90 % du couple maximal.
- Tₛ₅ :: temps de grillage, temps nécessaire à une température donnée pour que le couple augmente de 5 unités Mooney.

La densité de réticulation (M_{H}) et le temps de réticulation (t₉₀) du mélange obtenu ont été mesurés à 180°C à l'aide d'un rhéomètre Monsanto ODR 2000 E (Alpha Technologies, arc d'oscillation 3°, fréquence d'oscillation 100 cycles/min).

Le temps de réticulation est lui aussi déterminé à l'aide du rhéomètre utilisé dans les mêmes conditions que précédemment.

Le temps de grillage a été mesuré à 145°C à l'aide d'un viscosimètre Mooney MV 2000 (Alpha Technologies).

### Exemple 1 (non conforme à l'invention)

1000 g de polyéthylène basse densité (Mitene commercialisé par Ashland), 25 g de peroxyde de dicumyle (Luperox® DC) et 3 g de 2,2,6,6 tetramethylpiperidinyloxy (TEMPO) ont été mélangés dans un turbo mélangeur à 80° C (température de consigne) pendant 15 minutes (vitesse d'agitation = 930 tours/min). La poudre a ensuite été transformée en échantillon sous forme de disque par fusion à 110°C pendant 3 min. L'échantillon a ensuite été placé dans la chambre de rhéomètre ou du viscosimètre.

### Exemple 2 ( non conforme à l'invention)

L'exemple 1 a été reproduit sans l'utilisation de 2,2,6,6 tétraméthylpipéridinyloxy. Les résultats sont donnés dans le tableau 1. La comparaison des exemples 1 et 2 montre que le temps de grillage est plus élevé dans l'exemple 1 mais est accompagné d'une diminution importante de la densité de réticulation et d'une légère augmentation du temps de réticulation.

### Exemple 3 :

L'exemple 1 a été répété en ajoutant 3g de diisopropénylbenzène (DIPB).

La comparaison des résultats avec ceux obtenus dans les exemples précédents montrent sans ambiguïté qu'une telle combinaison permet de conserver une augmentation du temps de grillage tout en accédant à une densité de réticulation, plus élevée et un temps de réticulation plus faible.

**Tableau 1**

| | Additif(s) | Couple Maximal à 180°C (M_{H}) (N.m) | Temps de grillage à 145°C (Ts5) (min/s) | Temps de réticulation à 180°C (T₉₀) (min/s) |
|---|---|---|---|---|
| Exemple 1 | TEMPO | 1,21 | 19:00 | 7:10 |
| Exemple 2 | - | 1,95 | 8:40 | 6:50 |
| Exemple 3 | TEMPO+ DIPB | 2,88 | 19:10 | 6:02 |
| Exemple 4 | - | 5,94 | 2:50 | 5:21 |
| Exempte 5 | OH-TEMPO | 5,14 | 16:19 | 5:39 |
| Exemple 6 | MBM | 6,61 | 1:43 | 3:54 |
| Exemple 7 | OH-TEMPO + MBM | 6,45 | 14:38 | 4:46 |

### Exemple 4 : (non conforme à l'invention)

318g de compound EPDM DIN 7863 (contenant 100g de terpolymère d'éthylène-propylène-diène et 218g de charges) ont été conditionnés dans un mélangeur de type Banbury d'un volume de 350 cm³ à 50°C pendant 5 min. à une vitesse de 50 tours/min. 8 g de Luperox F40ED (40 % de di(tert-butylperoxy isopropyl)benzène et 60 % de charges inertes) ont été ajoutés et mélangés au compound pendant 5 min à 50°C à une vitesse de 50 tours/min.

### Exemple 5 : (non conforme à l'invention)

On opère comme à l'exemple 4 sauf que l'on ajoute, en plus du Luperox F40ED, 0,677g de 4-hydroxy 2,2,6,6 tetraméthylpipéridinyloxy (OH-TEMPO).

### Exemple 6 : (non conforme à l'invention)

On opère comme à l'exemple 5 sauf qu'à la place du OH-TEMPO, on ajoute 0,5 g de N,N'-m-phénylène dimaléide (bismaléimide de N,N'-m-phénylène ou MBM)

### Exemple 7 :

On opère comme à l'exemple 5 sauf que l'on ajoute, en plus du Luperox F40ED et OH-TEMPO, 0,5 g de MBM.

## Revendications

1. Composition retardant le grillage comprenant un nitroxyde et au moins un promoteur choisi dans le groupe (P) constitué de composés contenant au moins une double liaison.

2. Composition selon la revendication 1 **caractérisée en ce que** le nitroxyde est utilisé dans des proportions en poids allant de 1 : 0,2 à 1 : 5 par rapport à la quantité de promoteur présente.

3. Composition selon la revendication 1 **caractérisée en ce qu'**elle comprend en outre un initiateur de radicaux libres choisi dans le groupe constitué par des peroxydes organiques, des composés azoïques et de leurs mélanges.

4. Composition selon la revendication 3 **caractérisée en ce que** l'initiateur de radicaux libres est utilisé dans des proportions en poids de 1 : 0,02 à 1 : 1 par rapport à la quantité de nitroxyde présente.

5. Composition selon la revendication 3 ou 4 **caractérisée en ce que** l'initiateur de radicaux libres est utilisé dans des proportions en poids de 1 : 0,02 à 1 : 1 par rapport à la quantité de promoteur utilisée.

6. Composition selon l'une quelconque des revendications 3 à 5 **caractérisée en ce qu'**elle comprend en outre un polymère thermoplastique et/ou un polymère élastomère pouvant être réticulés au moyen d'un peroxyde ou d'un composé azoïque.

7. Composition selon la revendication 6 **caractérisée en ce que** l'initiateur de radicaux libres représente entre 0,2 et 5 parties, de préférence entre 0,5 et 3 parties, pour 100 parties en poids de polymère.

8. Composition selon l'une quelconque des revendications 1 à 7 **caractérisée en ce que** le nitroxyde est représenté par : 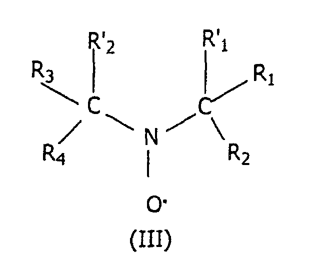 dans laquelle R₁, R₂, R₃, R₄, R'₁ et R'₂ pouvant être identiques ou différents représentent un atome d'hydrogène, un atome d'halogène tel que le fluor, le chlore, le brome ou l'iode, un groupement hydrocarboné linéaire, ramifié ou cyclique, saturé ou insaturé tels qu'un radical alkyle ou phényle, une chaîne de polymère pouvant par exemple être une chaîne de poly(meth)acrylate d'alkyle comme le polyméthacrylate de méthyle, de polydiène, de polyoléfine ou de polystyrène, un groupement fonctionnalisé tel qu'un groupement cyano -CN, un groupement ester-COOR, un groupement amide -CON(R)₂, un groupement alcoxyle-OR, un groupement phosphonate -PO(OR)₂ dans lequel R représente une chaîne hydrocarbonée ayant de 1 à 9 atomes de carbone.

9. Composition selon la revendication 8 **caractérisée en ce que** R'₁ et R'₂ peuvent être reliés entre eux pour former un cycle pour donner : 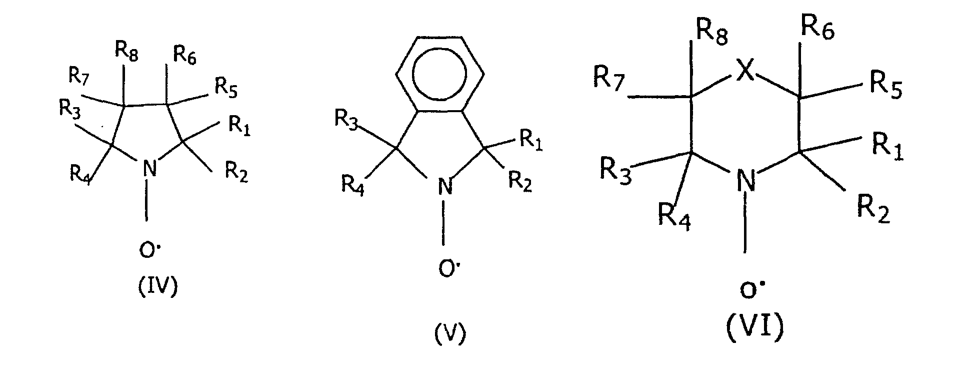 dans lesquelles R₅, R₆, R₇, R₈, pouvant être identiques ou différents, peuvent être choisis dans la même famille de groupement que celle envisagée pour R₁, R₂, R₃, R₄ et de plus, peuvent représenter un groupement hydroxyle - OH, un groupement acide tel que -COOH ou --PO(OH)₂ ou -SO₃H. De plus, X dans la formule ( VI ) représente un groupement bivalent choisi parmi le méthylène --CH₂ -- , le -C(OR)(OR')-, le carbonyl ― C(O)-, l'oxy ―O- et ―CHZ- avec Z représentant un reste monovalent choisi parmi les groupements cyano : -CN, amino : -NRR', alcoxy : -OR, iminoyl ―N=CRR', carboxylate : -OC(O)-R, amide : -NHR-C(O)R', dans lesquels R et R' identiques ou différents représentent un atome d'hydrogène, un groupement alkyle, linéaire ou ramifié ayant un nombre d'atomes de carbone allant de 1 à 10, un groupement benzyle ou phényle.

10. Composition selon la revendication 9 **caractérisée en ce que** X dans la formule (VI) est le phosphonate -O P(O)R"R"' avec R" et R"' ayant la même signification que Z

11. Composition selon l'une quelconque des revendications 1 à 7 **caractérisée en ce que** le nitroxyde est représenté par la formule générale (VII) : 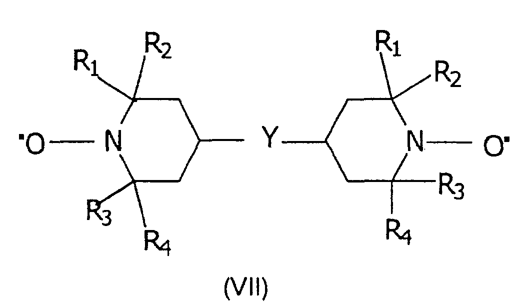 dans laquelle R₁, R₂, R₃, R₄, pouvant être identiques ou différents ont la même signification que ceux utilisés pour les formules (III) à (VI) et Y représente un groupement bivalent choisi parmi :
--OC(O)―(CRₐR_{b})ₙ―C(O)O--,
--NH―( CRₐR_{b})ₙNH--,
- -NHC(O)―( CRₐR_{b})ₙ --C(O)NH--,
-- S -- , --O-- ; Rₐ et R_{b}, identiques ou différents, représentent un atome d'hydrogène ou un radical alkyle, linéaire ou ramifié, ayant un nombre d'atomes de carbone allant de 1 à 10 et n représente un nombre entier allant de 0 à 20 .

12. Composition selon l'une quelconque des revendications 1 à 7 **caractérisée en ce que** le nitroxyde est représenté par la formule générale (VIII) : 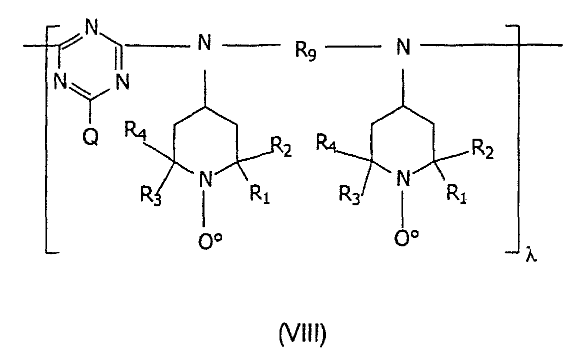 dans laquelle R₁,R₂,R₃ et R₄ pouvant être identiques ou différents, ont la même signification que ceux des formules précédentes ( III ) à (VII), λ est un nombre entier compris entre 1 et 20, R₉ représente un groupement alkylène ayant un nombre d'atomes de carbone allant de 2 à 12 qui peut être interrompu par un ―O―ou ―NR₁₀― avec R₁₀ désignant un atome d'hydrogène, un groupement alkyle ayant un nombre d'atomes de carbone compris entre 1 et 12, ou un groupement cycloalkyle et Q représente un radical --OR₁₁, --NHR₁₂, ou --NR₁₂R₁₃ où R₁₁ représente un radical alkyle, linéaire ou ramifié ayant un nombre d'atomes de carbone allant de 1 à 12, un radical alcoxyalkyle en C₃ ― C₁₂, un radical cyclohexyle, un radical benzyle, un radical phényle, un radical tolyle ou un reste 2, 2, 6, 6-tétrapipéridinyle, R₁₂ et R₁₃ ont la même signification que R₁₁, et de plus, peuvent également former ensemble et avec l'atome d'azote qui les porte un radical hétérocyclique à 5, 6 ou 7 chaînons pouvant contenir en outre un oxygène.

13. Composition selon l'une quelconque des revendications 1 à 7 **caractérisée en ce que** le nitroxyde est choisi parmi ceux représentés par la formule suivante : 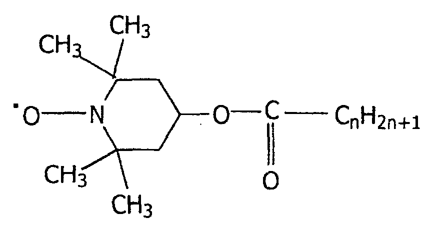 avec n pouvant varier de 1 à 20.

14. Composition selon l'une quelconque des revendications 1 à 7 **caractérisée en ce que** le nitroxyde est le 2,2,6,6-tétraméthyl-1-pipéridinyloxy généralement commercialisé sous la dénomination TEMPO, le 4-hydroxy 2,2,6,6-tétraméthyl-1-pipéridinyloxy commercialisé sous la dénomination 4-hydroxy-TEMPO, le 4-méthoxy-2,2,6,6-tétraméthyl-1-pipéridinyloxy communément appelé 4-méthoxy-TEMPO, le 4-oxo-2,2,6,6-tétraméthyl-1-pipéridinyloxy communément appelé 4-oxo-TEMPO, le 2,2,5,5 tétraméthyl-1-pyrrolidinyloxy commercialisé sous la marque PROXYL, le bis (1-oxyl-2,2,6,6 tétraméthylpipéridine-4-yl) sébacate commercialisé sous la marque CXA 5415 par la Société Ciba Specialty Chemical, le 2,2,6,6-tétraméthyl-4-hydroxypipéridine-1-oxyl monophosphonate, le 3-carboxy-2,2,5,5-tétraméthylpirrolidinyloxy (communément appelé 3-carboxy Proxyl).

15. Composition selon l'une quelconque des revendications 1 à 14 **caractérisée en ce que** le promoteur est choisi parmi le trans-stilbene, le divinylbenzène, le trans, trans -2,6 -diméthyl-2,4,6 octatriène, le dicyclopentadiène, le 3,7-diméthyl-1,3,6 -octatriène (OCIMENE), les composés représentés par la formule générale (I) : 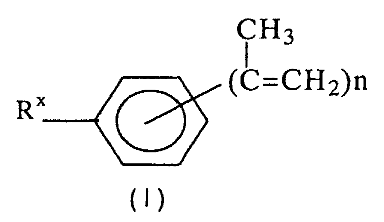 dans laquelle R^{x} représente un atome d'hydrogène ou un groupement alkyle de 1 à 9 atomes de carbone et n est un nombre entier compris entre 1 et 3,
- et les composés représentés par la formule générale (II) : 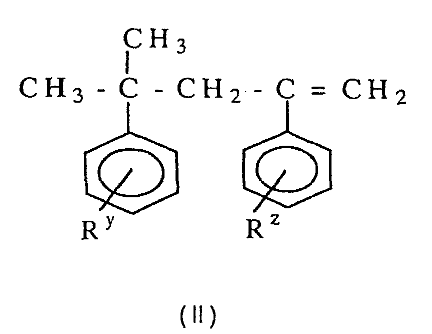
dans laquelle R^{y} et R^{z} pouvant être identiques ou différents représentent un groupement alkyle de 1 à 4 atomes de carbone.

16. Composition selon la revendication 15 **caractérisée en ce que** le promoteur est l'α-méthyl styrène, l'ortho, meta, para diisopropenyl benzène, le 1,2,4-triisopropenyl benzène, le 1,3,5 -triisopropenyl benzène, le 3-isopropyl-ortho diisopropenyl benzène, le 4-isopropyl-ortho diisopropenyl benzène, le 4-isopropyl-m- diisopropenyl benzène, le 5-isopropyl-m-diisopropenyl benzène, le 2-isopropyl-p diisopropenyl benzène, le 2,4-di (3-isopropylphenyl)-4-méthyl-1 pentène, le 2,4-di (4-iso propylphényl) 4-méthyl-1 pentène, le 2-(3-isopropylphényl)-4-(4-isopropylphényl)-4-méthyl-1-pentène, le 2-(4-isopropylphényl)-4-(3-isopropylphényl)-4-méthyl-1-pentène, le 2,4-di(3-méthylphényl)-4-méthyl-1 pentène, le 2,4-di(4-méthylphényl)-4-méthyl-1 pentène.

17. Composition selon l'une des revendications 1 à 14, **caractérisée en ce que** le promoteur est choisi parmi le méthacrylate de méthyle, le méthacrylate de lauryle, le méthacrylate d'allyle, le triacrylate de triméthylolpropane, le cyanurate de triallyle (TAC), l'isocyanurate de triallyle (TAIC), le phosphate de triallyle, le tétra-allyloxyéthane, le carbonate d'allyldiglycol, le trimellate de triallyle, le citrate de triallyle, l'adipate de diallyle, le téréphtalate de diallyle, l'oxalate de diallyle, le fumarate de diallyle, le diméthacrylate d'éthyléneglycol et le méthacrylate de 2-hydroxyéthyle.

18. Composition selon l'une quelconque des revendications 3 à 17 **caractérisée en ce que** l'initiateur de radicaux libres est le peroxyde de dicumyle et l'α, α' di [(t-butyl-peroxy) isopropyl] benzène.

19. Composition selon l'une quelconque des revendications 6 à 18 **caractérisée en ce que** le polymère est choisi parmi le polyéthylène linéaire de faible densité, le polyéthylène de faible densité, le polyéthylène de densité élevée, le polyéthylène chloré, les terpolymères d'éthylène-propylène-butadiène, les copolymères d'éthylène-acétate de vinyle, les copolymères d'éthylène propylène, le caoutchouc de silicone, le polyéthylène chlorosulfoné, les fluoroélastomères, les copolymères d'éthylène-(méth)acrylate de méthyle et les copolymères d'éthylène-méthacrylate de glycidyle.

20. Procédé de réticulation comprenant un polymère thermoplastique et/ou élastomère dans lequel on mélange ledit polymère en présence d'un initiateur de radicaux libres, d'un nitroxyde et d'un promoteur choisi dans le groupe (P).

21. Procédé selon la revendication 20 **caractérisé en ce que** la transformation en objets moulés ou extrudés est effectuée pendant ou après la réticulation.

22. Objets moulés ou extrudés susceptibles d'être obtenus selon la revendication 20.

## Patentansprüche

1. Zusammensetzung zur Verzögerung der Anvulkanisierung, umfassend ein Nitroxid und mindestens einen Promotor, ausgewählt aus der Gruppe (P), bestehend aus Verbindungen, die mindestens eine Doppelbindung enthalten.

2. Zusammensetzung nach Anspruch 1, **dadurch gekennzeichnet, dass** das Nitroxid in einem Gewichtsverhältnis im Bereich von 1:0,2 bis 1:5 in Bezug auf die vorhandene Promotormenge verwendet ist.

3. Zusammensetzung nach Anspruch 1, **dadurch gekennzeichnet, dass** sie außerdem einen radikalischen Initiator, ausgewählt aus der Gruppe bestehend aus organischen Peroxiden, Azoverbindungen und deren Gemischen, umfasst.

4. Zusammensetzung nach Anspruch 3, **dadurch gekennzeichnet, dass** der radikalische Initiator in einem Gewichtsverhältnis im Bereich von 1:0,02 bis 1:1 in Bezug auf die vorhandene Nitroxidmenge verwendet ist.

5. Zusammensetzung nach Anspruch 3 oder 4, **dadurch gekennzeichnet, dass** der radikalische Initiator in einem Gewichtsverhältnis im Bereich von 1:0,02 bis 1:1 in Bezug auf die verwendete Promotormenge verwendet ist.

6. Zusammensetzung nach einem der Ansprüche 3 bis 5, **dadurch gekennzeichnet, dass** sie außerdem ein thermoplastisches Polymer und/oder ein elastomeres Polymer umfasst, das mit Hilfe eines Peroxids oder einer Azoverbindung vernetzt werden kann.

7. Zusammensetzung nach Anspruch 6, **dadurch gekennzeichnet, dass** der radikalische Initiator zwischen 0,2 und 5 Anteile, vorzugsweise 0,5 und 3 Anteile, für 100 Gewichtsanteile Polymer darstellt.

8. Zusammensetzung nach einem der Ansprüche 1 bis 7, **dadurch gekennzeichnet, dass** das Nitroxid dargestellt ist durch: 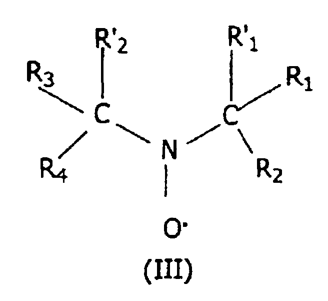 wobei R₁, R₂, R₃, R₄, R'₁ und R'₂ identisch oder verschieden sein können, ein Wasserstoffatom, ein Halogenatom wie z.B. Fluor, Chlor, Brom oder Iod, eine lineare verzweigte oder cyclische, gesättigte oder ungesättigte Kohlenwasserstoffgruppierung, wie z.B. einen Alkyl- oder Phenylrest, eine Polymerkette, die zum Beispiel eine Kette aus Poly(meth)alkylacrylat wie Polymethylmethacrylat, aus Polydien, aus Polyolefin oder aus Polystyrol sein kann, eine funktionalisierte Gruppierung wie z.B. eine Cyano-CN-Gruppierung, eine Ester-COOR-Gruppierung, eine -CON(R)₂-Amidgruppierung, eine Alkoxyl-OR-Gruppierung, eine -PO(OR)₂-Phosphatgruppierung, wobei R eine Kohlenwasserstoffkette mit 1 bis 9 Kohlenstoffatomen darstellt, darstellen.

9. Zusammensetzung nach Anspruch 8, **dadurch gekennzeichnet, dass** R'₁ und R'₂ verbunden sein können, um einen Zyklus zu bilden, um Folgendes zu erhalten: 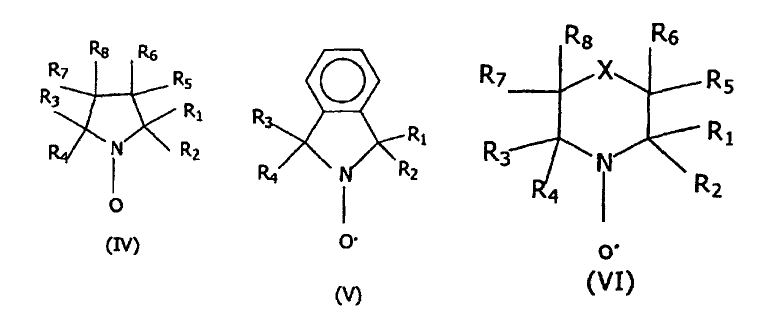 wobei R₅, R₆, R₇, R₈ identisch oder verschieden sein können, aus derselben Gruppierungsfamilie wie die für R₁, R₂, R₃, R₄ vorgesehene ausgewählt sein können, und außerdem eine -OH-Hydroxylgruppierung, eine Säuregruppierung wie z.B. -COOH oder --PO(OH)₂ oder -SO₃H darstellen können. Außerdem stellt X in der Formel (VI) eine bivalente Gruppierung dar , ausgewählt aus Methylen --CH₂--, -C(OR)(OR)'-, Carbonyl -C(O)-, Oxy -O- und --CHZ-, wobei Z einen monovalenten Rest, ausgewählt aus den Gruppierungen Cyano: -CN, Amino: -NRR', Alkoxy: -OR, Iminoyl -N=CRR', Carboxylat: -OC(O)-R, Amid: -NHR-C(O)R' darstellt, in denen R und R', identisch oder verschieden, ein Wasserstoffatom, eine lineare oder verzweigte Alkylgruppierung mit 1 bis 10 Kohlenstoffatomen, eine Benzyl- oder Phenylgruppierung darstellen.

10. Zusammensetzung nach Anspruch 9, **dadurch gekennzeichnet, dass** X in der Formel (VI) für das Phosphonat -O P(O)R''R''' steht, wobei R" und R''' dieselbe Bedeutung wie Z hat.

11. Zusammensetzung nach einem der Ansprüche 1 bis 7, **dadurch gekennzeichnet, dass** das Nitroxid dargestellt ist durch die allgemeine Formel (VII): 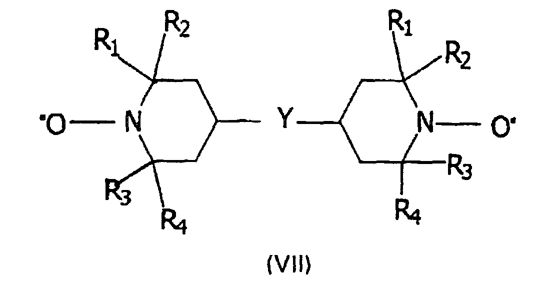 wobei R₁, R₂, R₃, R₄ identisch oder verschieden sein können und dieselbe Bedeutung wie die für die Formeln (III) bis (VI) verwendeten haben und Y eine bivalente Gruppierung darstellt, ausgewählt aus:
--OC(O)-(CRₐR_{b})ₙ--C(O)O--
--NH-(CRₐR_{b})ₙNH--
--NHC(O)-(CRₐR_{b})ₙ--CONH--
--S--,--O--;Rₐ und R_{b}, identisch oder verschieden, ein Wasserstoffatom oder einen linearen oder verzweigten Alkylrest mit 1 bis 10 Kohlenstoffatomen darstellt und n eine ganze Zahl zwischen 0 und 20 darstellt.

12. Zusammensetzung nach einem der Ansprüche 1 bis 7, **dadurch gekennzeichnet, dass** das Nitroxid dargestellt ist durch die allgemeine Formel (VIII): 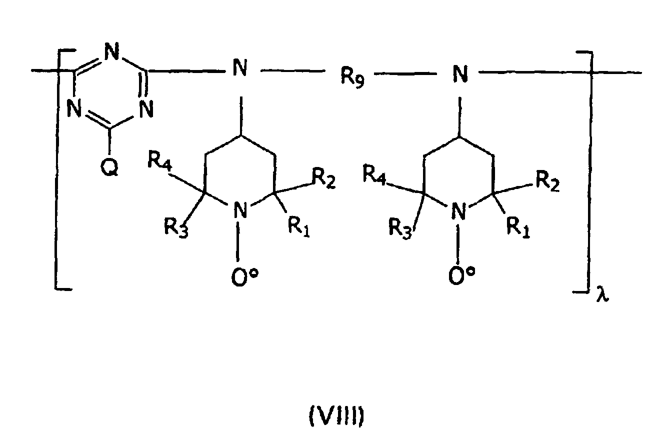 wobei R₁, R₂, R₃ und R₄, identisch oder verschieden, dieselbe Bedeutung haben wie jene der vorhergehenden Formeln (III) bis (VII), ? eine ganze Zahl zwischen 1 und 20 ist, R₉ eine Alkylengruppierung mit 2 bis 12 Kohlenstoffatomen, die durch -O- oder -NR10- unterbrochen sein kann, wobei R₁₀ für ein Wasserstoffatom steht, eine Alkylgruppierung mit 1 bis 12 Kohlenstoffatomen oder eine Cycloalkylgruppe darstellt und O einen Rest --OR₁₁, --NHR₁₂, oder --NR₁₂R₁₃ darstellt, wobei R₁₁ einen linearen oder verzweigten Alkylrest mit 1 bis 12 Kohlenstoffatomen, einen Alkoxyalkylrest in C₃-C₁₂, einen Cyclohexylrest, einen Benzylrest, einen Phenylrest, einen Tolylrest oder einen 2,2,6,6-Tetrapiperidinylrest darstellt, R₁₂ und R₁₃ dieselbe Bedeutung haben wie R₁₁ und außerdem auch zusammen und mit dem Stickstoffatom, das sie trägt, einen heterocyclischen Rest von 5,6 oder 7 Gliedern, die außerdem ein Sauerstoffatom enthalten können, bilden kann.

13. Zusammensetzung nach einem der Ansprüche 1 bis 7, **dadurch gekennzeichnet, dass** das Nitroxid ausgewählt ist aus jenen, die durch die folgende Formel dargestellt sind: 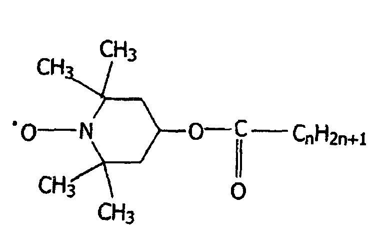 wobei n von 1 bis 20 variieren kann.

14. Zusammensetzung nach einem der Ansprüche 1 bis 7, **dadurch gekennzeichnet, dass** das Nitroxid das 2,2,6,6-Tetramethyl-1-piperidinyloxy, allgemein vertrieben unter der Bezeichnung TEMPO, das 4-Hydroxy-2,2,6,6-tetramethyl-1-piperidinyloxy, vertrieben unter der Bezeichnung 4-Hydroxy-TEMPO, das 4-Methoxy-2,2,6,6-tetramethyl-1-piperidinyloxy, gewöhnlich bezeichnet als 4-Methoxy-TEMPO, das 4-Oxo-2,2,6,6-tetramethyl-1-piperidinyloxy, gewöhnlich bezeichnet als 4-Oxo-TEMPO, das 2,2,5,5,-Tetramethyl-1-pyrrolidinyloxy, vertrieben unter der Marke PROXYL, das Bis(1-oxyl-2,2,6,6 tetramethylpiperidin-4-yl)sebacat, vertrieben unter der Marke CXA 5415 durch die Firma Ciba Specialty Chemical, das 2,2,6,6-Tetramethyl-4-hydroxypiperidin-1-oxylmonophosphonat, das 3-Carboxy-2,2,5,5-tetramethylpirrolidinyloxy, gewöhnlich bezeichnet als 3-Carboxy-proxyl, ist.

15. Zusammensetzung nach einem der Ansprüche 1 bis 14, **dadurch gekennzeichnet, dass** der Promotor ausgewählt ist aus Transstilben, Divinylbenzen, Trans, Trans-2,6-dimethyl-2,4,6-octatrien, Dicyclopentadien, 3,7-Dimethyl-1,3,6-octatrien (OCIMENE), den Verbindungen, dargestellt durch die allgemeine Formel (I): 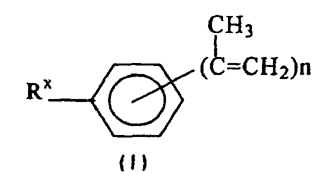 wobei R^{x} ein Wasserstoffatom oder eine Alkylgruppierung mit 1 bis 9 Kohlenstoffatomen darstellt und n für eine ganze Zahl zwischen 1 und 3 steht,
- und die Verbindungen dargestellt sind durch die allgemeine Formel (II): 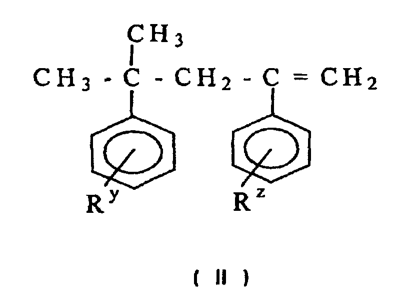
wobei R^{y} und R^{z}, identisch oder verschieden, eine Alkylgruppierung mit 1 bis 4 Kohlenstoffatomen darstellen.

16. Zusammensetzung nach Anspruch 15, **dadurch gekennzeichnet, dass** der Promotor das a-Methylstyrol, Ortho, Meta, Paradiisopropenylbenzen, das 1,2,4,Triisopropenylbenzen, das 1,3,5-Triisopropenylbenzen, das 3-Isopropylorthodiisopropenylbenzen, das 4-Isopropyl-orthodiisopropenylbenzen, das 4-Isopropyl-m-diisopropenylbenzen, das 5-Isopropyl-m-diisopropenylbenzen, das 2-Isopropyl-p diisopropenylbenzen, das 2,4-Di(3-isopropylphenyl)-4-methyl-1-penten, das 2,4-Di(4-isopropylphenyl)-4-methyl-1-penten, das 2-(3-Isopropylphenyl)-4-(4-isopropylphenyl)-4-methyl-1-penten, das 2-(4-Isopropylphenyl)-4-(3-isopropylphenyl)-4-methyl-1-penten, das 2,4-Di(3-methylphenyl)-4-methyl-1-penten, das 2,4-Di(4-methylphenyl)-4-methyl-1-penten ist.

17. Zusammensetzung nach einem der Ansprüche 1 bis 14, **dadurch gekennzeichnet, dass** der Promotor aus Methylmethacrylat, Laurylmethacrylat, Allylmethacrylat, Trimethylolpropantriacrylat, Triallylcyanurat (TAC), Triallylisocyanurat (TAIC), Triallylphosphat, Tetraallyloxyethan, Allyldiglycolcarbonat, Triallyltrimellat, Triallylcitrat, Diallyladipat, Diallylterephtalat, Diallyloxalat, Diallylfumarat, Ethylenglycoldimethacrylat und 2-Hydroxyethylmethacrylat ausgewählt ist.

18. Zusammensetzung nach einem der Ansprüche 3 bis 17, **dadurch gekennzeichnet, dass** der radikalische Initiator das Dicumylperoxid und das a, a' Di[(t-butyl-peroxy)isopropyl]benzen ist.

19. Zusammensetzung nach einem der Ansprüche 6 bis 18, **dadurch gekennzeichnet, dass** das Polymer aus linearem Polyethylen niedriger Dichte, Polyethylen niedriger Dichte, Polyethylen hoher Dichte, chloriertem Polyethylen, den Ethylen-Propylen-Butadienpolymeren, den Ethylen-Vinylacetat-Copolymerisaten, den Ethylen-Propylen-Copolymerisaten, Siliconkautschuk, chlorsulfoniertem Polyethylen, den Fluoroelastomeren, den Ethylen-Methyl(meth)-acrylat-Copolymerisaten, und den Ethylen-Glycidylmethacrylaten-Copolymerisaten ausgewählt ist.

20. Vernetzungsverfahren, umfassend ein thermoplastisches Polymer und/oder Elastomer, wobei man das Polymer in Gegenwart eines radikalischen Initiators, eines Nitroxids und eines Promotors, ausgewählt aus der Gruppe (P), mischt.

21. Verfahren nach Anspruch 20, **dadurch gekennzeichnet, dass** die Umsetzung in geformte oder extrudierte Gegenstände während oder nach der Vernetzung ausgeführt wird.

22. Geformte oder extrudierte Gegenstände, die nach Anspruch 20 hergestellt werden können.

## Claims

1. Scorch-retardant composition comprising a nitroxide and at least one promoter chosen from group (P) consisting of compounds containing at least one double bond.

2. Composition according to Claim 1, **characterized in that** the nitroxide is used in weight proportions ranging from 1:0.2 to 1:5 relative to the amount of promoter present.

3. Composition according to Claim 1, **characterized in that** it also comprises a free-radical initiator chosen from the group consisting of organic peroxides and azo compounds, and mixtures thereof.

4. Composition according to Claim 3, **characterized in that** the free-radical initiator is used in weight proportions of from 1:0.02 to 1:1 relative to the amount of nitroxide present.

5. Composition according to Claim 3 or 4, **characterized in that** the free-radical initiator is used in weight proportions of from 1:0.02 to 1:1 relative to the amount of promoter used.

6. Composition according to any one of Claims 3 to 5, **characterized in that** it also comprises a thermoplastic polymer and/or an elastomeric polymer which may be crosslinked by means of a peroxide or an azo compound.

7. Composition according to Claim 6, **characterized in that** the free-radical initiator represents between 0.2 and 5 parts and preferably between 0.5 and 3 parts per 100 parts by weight of polymer.

8. Composition according to any one of Claims 1 to 7, **characterized in that** the nitroxide is represented by: 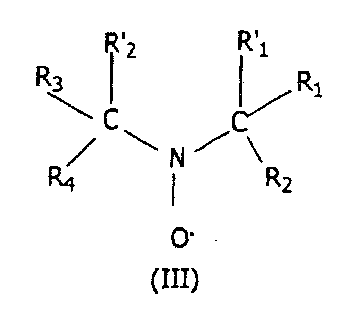 in which R₁, R₂, R₃, R₄, R'₁ and R'₂, which may be identical or different, represent a hydrogen atom, a halogen atom such as fluorine, chlorine, bromine or iodine, a linear, branched or cyclic, saturated or unsaturated hydrocarbon-based group such as an alkyl or phenyl radical, a polymer chain which may be, for example, a polyalkyl (meth)acrylate chain, for instance polymethyl methacrylate, a polydiene, polyolefin or polystyrene chain, a functionalized group such as a cyano -CN group, an ester -COOR group, an amide -CON(R)₂ group, an alkoxy -OR group or a phosphonate -PO(OR)₂ group in which R represents a hydrocarbon-based chain containing from 1 to 9 carbon atoms.

9. Composition according to Claim 8, **characterized in that** R'₁ and R'₂ may be linked together to form a ring to give: 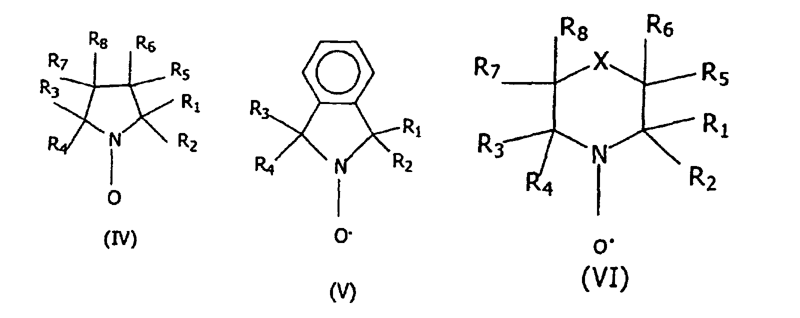 in which R₅, R₆, R₇ and R₈, which may be identical or different, may be chosen from the same family of groups as that envisaged for R₁, R₂, R₃ and R₄ and, furthermore, may represent a hydroxyl -OH group, an acid group such as -COOH or -PO(OH)₂ or -SO₃H. Furthermore, X in formula (VI) represents a divalent group chosen from methylene, -CH₂-, -C(OR)(OR')-, carbonyl -C(O)-, oxy -O- and -CHZ- with Z representing a monovalent residue chosen from cyano: -CN, amino: -NRR', alkoxy: -OR, iminoyl -N=CRR', carboxylate: -OC(O)-R and amide: -NHR-C(O)R' groups, in which R and R', which may be identical or different, represent a hydrogen atom, a linear or branched alkyl group containing a number of carbon atoms ranging from 1 to 10, or a benzyl or phenyl group.

10. Composition according to Claim 9, **characterized in that** X in formula (VI) is phosphonate -OP(O)R"R"' with R" and R"' having the same meaning as Z.

11. Composition according to any one of Claims 1 to 7, **characterized in that** the nitroxide is represented by the general formula (VII): 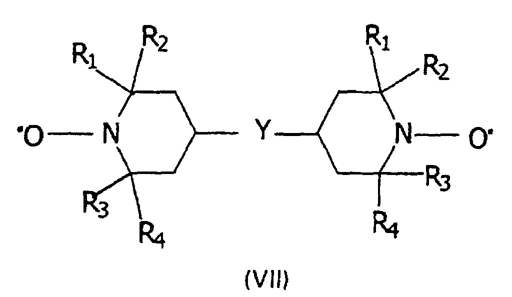 in which R₁, R₂, R₃ and R₄, which may be identical or different, have the same meaning as those used for formulae (III) to (VI) and Y represents a divalent group chosen from:
-OC(O)-(CRₐR_{b})ₙ-C(O)O-,
-NH-(CRₐR_{b})ₙNH-,
-NHC(O)-(CRₐR_{b})ₙ-C(O)NH-,
-S-, -O-; Rₐ and R_{b}, which may be identical or different, represent a hydrogen atom or a linear or branched alkyl radical containing a number of carbon atoms ranging from 1 to 10 and n represents an integer ranging from 0 to 20.

12. Composition according to any one of Claims 1 to 7, **characterized in that** the nitroxide is represented by the general formula (VIII): 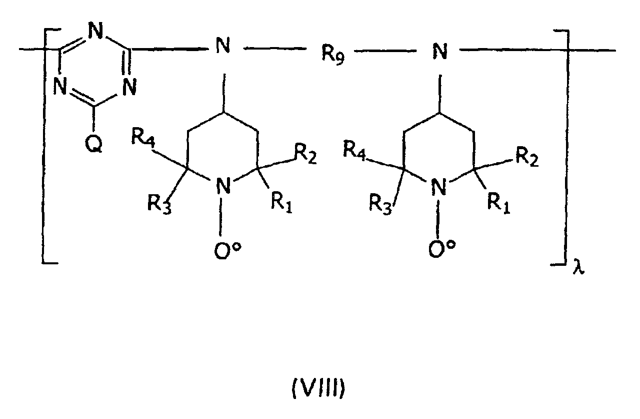 in which R₁, R₂, R₃ and R₄, which may be identical or different, have the same meaning as those in the above formulae (III) to (VII), λ is an integer between 1 and 20, R₉ represents an alkylene group containing a number of carbon atoms ranging from 2 to 12 which may be interrupted with an -O- or -NR₁₀- with R₁₀ denoting a hydrogen atom, an alkyl group containing a number of carbon atoms of between 1 and 12, or a cycloalkyl group, and Q represents a radical -OR₁₁, -NHR₁₂ or -NR₁₂R₁₃ in which R₁₁ represents a linear or branched alkyl radical containing a number of carbon atoms ranging from 1 to 12, a C₃-C₁₂ alkoxyalkyl radical, a cyclohexyl radical, a benzyl radical, a phenyl radical, a tolyl radical or a 2,2,6,6-tetrapiperidyl residue, R₁₂ and R₁₃ have the same meaning as R₁₁ and may moreover also form, together and with the nitrogen atom which bears them, a 5-, 6- or 7-membered heterocyclic radical which may also contain an oxygen.

13. Composition according to any one of Claims 1 to 7, **characterized in that** the nitroxide is chosen from those represented by the following formula: 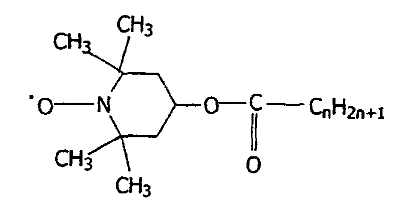 with n possibly ranging from 1 to 20.

14. Composition according to any one of Claims 1 to 7, **characterized in that** the nitroxide is 2,2,6,6-tetramethyl-1-piperidyloxy, generally sold under the name TEMPO, 4-hydroxy-2,2,6,6-tetramethyl-1-piperidyloxy, sold under the name 4-hydroxy TEMPO, 4-methoxy-2,2,6,6-tetramethyl-1-piperidyloxy, commonly known as 4-methoxy TEMPO, 4-oxo-2,2,6,6-tetramethyl-1-piperidyloxy, commonly known as 4-oxo TEMPO, 2,2,5,5-tetramethyl-1-pyrrolidinyloxy, sold under the brand name PROXYL, bis(1-oxy-2,2,6,6-tetramethyl-4-piperidyl) sebacate, sold under the brand name CXA 5415 by the company Ciba Specialty Chemical, 2,2,6,6-tetramethyl-4-hydroxy-1-piperidyloxy monophosphonate and 3-carboxy-2,2,5,5-tetramethylpyrrolidinyloxy (commonly known as 3-carboxy Proxyl).

15. Composition according to any one of Claims 1 to 14, **characterized in that** the promoter is chosen from trans-stilbene, divinylbenzene, trans,trans-2,6-dimethyl-2,4,6-octatriene, dicyclopentadiene, 3,7-dimethyl-1,3,6-octatriene (OCIMENE), the compounds represented by the general formula (I): 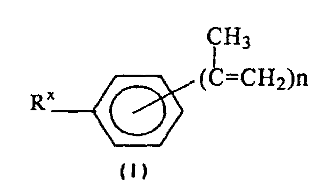 in which R^{x} represents a hydrogen atom or an alkyl group of 1 to 9 carbon atoms and n is an integer between 1 and 3,
- and the compounds represented by the general formula (II): 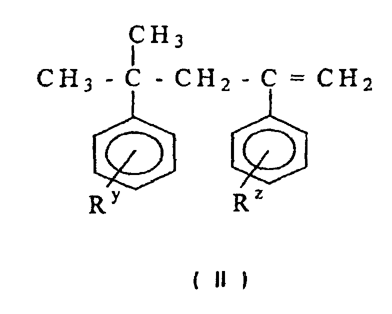
in which R^{y} and R^{z}, which may be identical or different, represent an alkyl group of 1 to 4 carbon atoms.

16. Composition according to Claim 15, **characterized in that** the promoter is α-methylstyrene, ortho-, meta- and para-diisopropenylbenzene, 1,2,4-triisopropenylbenzene, 1,3,5-triisopropenylbenzene, 3-isopropyl-ortho-diisopropenylbenzene, 4-isopropyl-ortho-diisopropenylbenzene, 4-isopropyl-m-diisopropenylbenzene, 5-isopropyl-m-diisopropenylbenzene, 2-isopropyl-p-diisopropenylbenzene, 2,4-bis(3-isopropylphenyl)-4-methyl-1-pentene, 2,4-bis(4-isopropylphenyl)-4-methyl-1-pentene, 2-(3-isopropylphenyl)-4-(4-isopropylphenyl)-4-methyl-1-pentene, 2-(4-isopropylphenyl)-4-(3-isopropylphenyl)-4-methyl-1-pentene, 2,4-bis(3-methylphenyl)-4-methyl-1-pentene and 2,4-bis(4-methylphenyl)-4-methyl-1-pentene.

17. Composition according to one of Claims 1 to 14, **characterized in that** the promoter is chosen from methyl methacrylate, lauryl methacrylate, allyl methacrylate, trimethylolpropane triacrylate, triallyl cyanurate (TAC), triallyl isocyanurate (TAIC), triallyl phosphate, tetraallyloxyethane, diallyldiglycol carbonate, triallyl trimellitate, triallyl citrate, diallyl adipate, diallyl terephthalate, diallyl oxalate, diallyl fumarate, ethylene glycol dimethacrylate and 2-hydroxyethyl methacrylate.

18. Composition according to any one of Claims 3 to 17, **characterized in that** the free-radical initiator is dicumyl peroxide and α,α'-di[(t-butylperoxy)isopropyl]benzene.

19. Composition according to any one of Claims 6 to 18, **characterized in that** the polymer is chosen from linear low density polyethylene, low density polyethylene, high density polyethylene, chlorinated polyethylene, ethylene/propylene/butadiene terpolymers, ethylene/vinyl acetate copolymers, ethylene/propylene copolymers, silicone rubber, chlorosulphonated polyethylene, fluoroelastomers, ethylene/methyl (meth)acrylate copolymers and ethylene/glycidyl methacrylate copolymers.

20. Crosslinking process comprising a thermoplastic and/or elastomeric polymer, in which the said polymer is mixed in the presence of a free-radical initiator, a nitroxide and a promoter chosen from group (P).

21. Process according to Claim 20, **characterized in that** the conversion into moulded or extruded articles is carried out during or after crosslinking.

22. Moulded or extruded articles which may be obtained according to Claim 20.
